# EUROPÄISCHE PATENTSCHRIFT

(11) **EP 2 025 707 B1**
(45) Veröffentlichungstag und Bekanntmachung des Hinweises auf die Patenterteilung: **01.02.2012**
(21) Anmeldenummer: 08104783.9
(22) Anmeldetag: 17.07.2008
(51) Int. Cl.: C08J 7/04, C09D 5/03, B29C 47/02

(54) **Strangextrudat sowie Verfahren zu seiner Herstellung und Verwendung**
Cable extrudate and method for its manufacture and application
Produit d'extrusion en faisceau et son procédé de fabrication et d'utilisation

(30) Priorität: 24.07.2007 DE 102007034328
(43) Veröffentlichungstag der Anmeldung: 18.02.2009
(73) Patentinhaber: ROBERT BOSCH GMBH, 70442 Stuttgart (DE)
(72) Erfinder: Van De Rostyne, Kris, 3360, Opvelp (BE); Lay, Reiner, 52072, Aachen (DE)

(56) Entgegenhaltungen:
- WO-A-01/85482
- WO-A-2006/041362
- DE-A1- 2 246 679
- DE-A1- 10 116 929

## Beschreibung

Die Erfindung geht aus von einem Strangextrudat aus einem Elastomermaterial, wobei auf das Elastomermaterial eine Beschichtung aus einem Polymermaterial aufgebracht ist. Weiterhin betrifft die Erfindung ein Verfahren zur Herstellung eines Strangextrudates sowie die Verwendung des Strangextrudates.

Strangextrudate aus einem Elastomermaterial werden zum Beispiel eingesetzt zur Herstellung von Wischgummis oder Dichtschnüren. Derartige Wischgummis werden zum Beispiel an Scheibenwischern von Kraftfahrzeugen eingesetzt. Weitere Anwendungsbereiche von Wischgummis sind zum Beispiel auch Scheibenabzieher, wie sie zum Beispiel zum Reinigen von Glasscheiben in Haushalten eingesetzt werden. Einsatzbereiche von Dichtschnüren sind zum Beispiel Fensterdichtungen oder Türdichtungen.

Um die Reibung beim Betrieb eines als Scheibenwischer eingesetzten Wischgummis zu reduzieren, ist es bekannt, den Wischgummi zum Beispiel mit einer Graphit-Beschichtung oder Gleitlackbeschichtung zu versehen.

Aus DE-A 198 14 805 ist ein Beschichtungsverfahren für ein Wischergummi bekannt. Hierbei erfolgt die Beschichtung durch einen CVD- und/oder PVD-Prozess, bei dem die Generierung und Aktivierung des dampfförmigen Beschichtungsmaterials thermisch, Plasma- und/oder Laser-gestützt erfolgt. Nachteil des Verfahrens ist es, dass ein CVD- bzw. ein PVD-Prozess eine komplexe Anlagentechnik benötigt. Zudem ist ein Vakuum oder Hochvakuum erforderlich. Dadurch kann die Beschichtung nur in einem Batch-Prozess oder als In-Line-Prozess mit sehr aufwändiger Schleusentechnik realisiert werden.

Aus der WO 2006/041362 A1 ist eine Methode bekähnt, Polymermaterialien bereitzustellen. Weiterhin ist aus der WO 01/85482 A1 ein neuartiger Verbundstoff bekannt, der für Dichtungen, insbesondere Autofensterdichtungen, genutzt wird, die flexibel, abnutzungsresistent und mit einem niedrigen Reibungskoeffizienten ausgestattet sind. Aus der DE 101 16 929 A1 sind eine Gleitlackkomponente und ein Gleitlack, insbesondere zum Beschichten von Elastomerprofilen, bekannt.

Bei einem erfindungsgemäß ausgebildeten Strangextrudat aus einem Elastomermaterial ist auf das Elastomermaterial eine Beschichtung aus einem Polymermaterial aufgebracht. Die Beschichtung weist dabei eine Schichtdicke von weniger als 5 µm auf.

Vorteil des erfindungsgemäß ausgebildeten Strangextrudates ist es, wenn dieses als Wischgummi für einen Scheibenwischer eingesetzt wird, dass ein reduzierter Reibwert zwischen Gummi und Glas zum Beispiel einer Fahrzeugscheibe erreicht wird und dadurch ein besseres Laufverhalten sowohl auf einer Scheibe mit einer hydrophilen Oberfläche als auch auf einer Scheibe mit einer hydrophoben Oberfläche erzielt wird. Zudem wird das Laufgeräusch des Scheibenwischers reduziert. Aufgrund der Schichtdicke von weniger als 1 µm kann das Strangextrudat mit den aus dem Stand der Technik bekannten Prozessen zur Herstellung von Abschnitten einer definierten Länge geschnitten werden und eine saubere Schneidkante realisiert werden. Auch bei der Herstellung eines Strangextrudates, das zwei Wischgummis umfasst, die an der Wischkante miteinander verbunden sind und zur Herstellung einzelner Wischgummis getrennt werden müssen, lässt sich aufgrund der geringen Schichtdicke eine saubere Schneidkante, die gleichzeitig die Wischkante bildet, realisieren. Die saubere Schneidkante führt zu einer guten Wischqualität. Zudem hat die Beschichtung aufgrund ihrer geringen Dicke nur einen geringen Einfluss auf die Flexibilität des Strangextrudates. Dieses kann somit ebenso wie ein unbeschichtetes Strangextrudat eingesetzt werden ohne dass Einschränkungen hinsichtlich des Einsatzes hingenommen werden müssen.

Als Elastomermaterial für das Strangextrudat eignen sich alle Elastomermaterialien, die für den Einsatzbereich des Strangextrudates erforderliche Eigenschaften aufweisen. Bevorzugt ist das Elastomermaterial für das Strangextrudat jedoch ausgewählt aus Naturkautschuk, Chloropren-Kautschuk, Ethylen-Propylen-Terpolymer, Ethylen-Propylen-Kautschuk und Mischungen daraus.

Als Polymermaterial eignen sich insbesondere thermoplastische Polymere. Diese bilden durch Aufschmelzen und anschließendes Aushärten eine gleichmäßige durchgehende Beschichtung in Form eines Films. Geeignete thermoplastische Polymere sind zum Beispiel Polyethylen mit ultrahoher molekularer Masse (UHMW-PE), Polyethylen hoher Dichte (HDPE), strahlenvernetztes Polyethylen (PE-X), Polyethylen (PE), Polypropylen (PP), Polytetrafluorethylen (PTFE) und Polyamid (PA) . Besonders bevorzugt ist HDPE. Dieses weist eine gute Abriebsbeständigkeit auf und hat einen niedrigen Reibungskoeffizient beim Wischen auf einer Glasfläche.

Um die Haftung der Beschichtung aus dem Polymermaterial auf dem Elastomermaterial des Strangextrudates zu verbessern ist es bevorzugt, wenn das Polymermaterial für die Beschichtung mindestens einen Haftvermittler enthält. Geeignete Haftvermittler sind zum Beispiel Polyolefinplastomere und Polyolefinelastomere.

Zur Anpassung der Eigenschaften des mit dem Polymermaterial beschichteten Strangextrudates ist es möglich, dem Polymermaterial für die Beschichtung weitere Additive zuzugeben. Derartige Additive sind zum Beispiel UV-Stabilisatoren, Antioxidantien und Ozonschutzmittel.

Das erfindungsgemäße Verfahren zur Herstellung des vorstehend beschriebenen Strangextrudates umfasst folgende Schritte:
(a) Auftragen einer Schicht aus einem Polymerpulver auf ein strangförmiges Grundsubstrat aus einem Elastomermaterial, wobei das Polymerpulver im Wesentlichen aus Partikeln mit einer Korngröße von maximal 5 µm besteht,
(b) Aufschmelzen des Polymerpulvers zur Herstellung einer einheitlichen Beschichtung in Form eines Films auf dem Grundsubstrat.

Dadurch dass das Polymerpulver im Wesentlichen aus Nanopartikeln besteht, ist es möglich, eine Schichtdicke von weniger als 5 µm zu erzielen. Durch das Aufschmelzen des Polymerpulvers wird eine einheitliche Schicht auf dem Strangextrudat erzeugt. Die einzelnen Pulverkörner schmelzen zu einem durchgehenden Film zusammen.

In einer bevorzugten Ausführungsform wird das Polymerpulver während des Extrusionsverfahrens auf das Strangextrudat aufgetragen. Dies ermöglicht eine In-line-Fertigung. Es ist nicht notwendig, zuerst das Strangextrudat herzustellen und dieses anschließend in einer separaten Anlage zu beschichten. Dies hat den Vorteil, dass nur eine Fertigungslinie zur Herstellung des beschichteten Strangextrudates notwendig ist. Hierdurch wird ebenfalls eine kontinuierliche Fertigung ermöglicht.

In einer ersten Verfahrensvariante wird die Schicht aus dem Polymerpulver in Schritt (a) vor einem Vulkanisierungsschritt auf das Strangextrudat aus dem Elastomermaterial aufgetragen. Dies hat den Vorteil, dass das Aufschmelzen des Polymerpulvers in Schritt (b) während der Vulkanisation des Strangextrudates erfolgen kann. Es ist kein zusätzlicher Schritt zum Aufschmelzen erforderlich. Das Aufschmelzen während der Vulkanisation erfolgt zum Beispiel im Salzbad oder durch Heißluft.

In einer weiteren Ausführungsform wird das Strangextrudat aus dem Elastomermaterial zumindest teilweise vulkanisiert, bevor die Schicht aus dem Polymerpulver in Schritt (a) aufgetragen wird. In diesem Fall ist es notwendig, nach dem Auftragen des Polymerpulvers in einem weiteren Schritt das Polymerpulver zum Aufschmelzen in Schritt (b) zu erhitzen. Das Erhitzen kann zum Beispiel durch Heißluft oder Mikrowellen erfolgen. Bei einer kontinuierlichen Fertigung wird das Strangextrudat mit dem darauf aufgebrachten Polymerpulver durch einen kontinuierlichen Ofen geführt, der zum Beispiel durch Heißluft oder Mikrowellen betrieben wird. Die Temperatur, bei der das Aufschmelzen in Schritt (b) erfolgt, ist von dem eingesetzten Polymermaterial abhängig. Im Allgemeinen liegt die Temperatur jedoch im Bereich zwischen 120 und 250°C. Wenn PTFE eingesetzt wird muss die Temperatur jedoch oberhalb von 327°C, der Schmelztemperatur von PTFE, liegen. Es ist jedoch darauf zu achten, dass die Temperatur, bei der das Aufschmelzen erfolgt, nicht höher ist als die Zersetzungstemperatur des Polymermaterials. So kann es zum Beispiel insbesondere dann, wenn die Vulkanisierungstemperatur höher liegt als die Zersetzungstemperatur des Polymermaterials, notwendig sein, das Elastomermaterial zunächst vollständig zu vulkanisieren, bevor das Polymermaterial auf das Strangextrudat aufgebracht wird.

Insbesondere bei polaren Beschichtungsmaterialien, z. B. bei Polyamiden, ist es möglich, das Polymerpulver mit Hilfe von Mikrowellen zu erhitzen und aufzuschmelzen. Weiterhin ist es auch möglich, das strangförmige Grundsubstrat aus dem Elastomermaterial aufzuheizen und auf dieses das Polymerpulver für die Beschichtung aufzutragen. Durch das aufgeheizte Grundsubstrat wird das Polymerpulver aufgeschmolzen und bildet so die Beschichtung. Zum Aufheizen eignen sich z. B. Heißluft, ein Salzbad oder Mikrowellen.

Verwendung findet das erfindungsgemäß ausgebildete Strangextrudat zum Beispiel zur Herstellung von Wischgummis, insbesondere von Wischgummis für Scheibenwischer von Kraftfahrzeugen, zur Herstellung von Türdichtungen oder zur Herstellung von Fensterdichtungen. Weiterhin kann das erfindungsgemäß ausgebildete Strangextrudat auch verwendet werden zur Herstellung von Kabeln.

Ausführungsformen der Erfindung sind in den Zeichnungen dargestellt und der nachfolgenden Beschreibung näher erläutert.

Es zeigen:
- Figur 1: einen Querschnitt durch ein Strangextrudat mit Beschichtung,
- Figur 2: eine schematische Darstellung zur Herstellung des beschichteten Strangextru- dats,
- Figur 3: eine schematische Darstellung zur Herstellung des Strangextrudats in einer zweiten Ausführungsform.

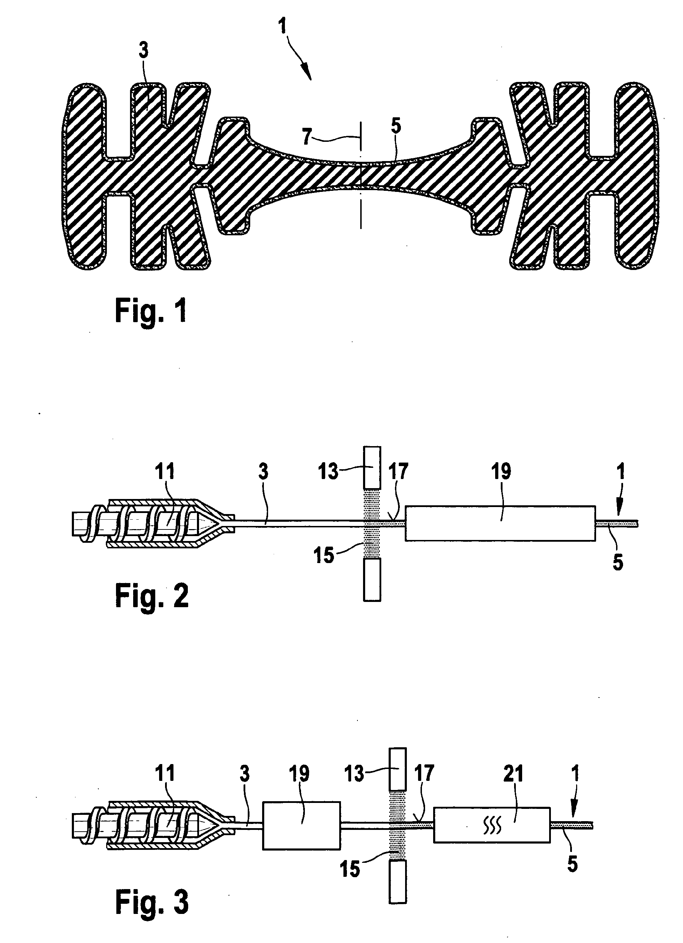

In Figur 1 ist ein erfindungsgemäß ausgebildetes Strangextrudat mit Beschichtung dargestellt.

Ein erfindungsgemäß ausgebildetes Strangextrudat 1 umfasst ein Grundsubstrat 3. Das Grundsubstrat 3 ist im Allgemeinen ein Strang, der durch ein Extrusionsverfahren hergestellt wird. Üblicherweise ist das Grundsubstrat 3 aus einem Elastomer gefertigt. Als Material für das Grundsubstrat 3 eignen sich wie vorstehend beschrieben NR, CR, EPDM, EPM oder Mischungen daraus. Wenn das Grundsubstrat 3 für Wischgummis von Scheibenwischern eingesetzt werden soll, so ist es gewünscht, dass der Reibwert zwischen dem als Wischgummi eingesetzten Strangextrudat 1 und einer Scheibe, auf welcher der Scheibenwischer eingesetzt wird, reduziert wird. Der bessere Reibwert führt zu einem reduzierten Laufgeräusch. Erzielt wird ein verbesserter Reibwert erfindungsgemäß durch Aufbringen einer Beschichtung 5 auf das Grundsubstrat 3. Die Beschichtung 5 ist erfindungsgemäß eine dünne Polymerbeschichtung in Form eines Films, die auf dem Grundsubstrat 3 haftet. Als Materialien für die Beschichtung 5 eignen sich zum Beispiel UHMW-PE, HDPE, PE-X, PE, PP, PTFE, PA. Aufgrund ihrer geringen Dicke hat die Beschichtung 5 keinen Einfluss auf die Flexibilität des Strangextrudats 1.

Der in Figur 1 dargestellt Querschnitt eines Strangextrudates 1 zeigt zwei Wischgummis, die zunächst als ein Strangextrudat 1 hergestellt werden. Um einzelne Scheibenwischer zu erzeugen, ist es erforderlich, dass Strangextrudat 1 entlang seiner Mittellinie 7 zu trennen. Es werden zwei einzelne Wischgummis aus einem Strangextrudat 1 hergestellt. Um eine gute Wischqualität zu erzielen, ist es notwendig, dass die Schneidkante, die sich durch das Trennen der beiden Hälften des Strangextrudates 1 an der Mittellinie 7 ergibt, keine Ausbröckelungen oder Diskontinuitäten zeigt. Diese würden zu Streifen im Wischbild führen. Eine Schneidkante ohne Ausbröckelungen oder Diskontinuitäten wird durch die erfindungsgemäß dünne Beschichtung 5 erzielt. Bei einer dickeren Beschichtung führt der große Elastizitätsunterschied zwischen dem Elastomermaterial des Grundsubstrates 3 und dem Beschichtungsmaterial zu einer schlechten Schneidkante. Durch die erfindungsgemäße dünne Beschichtung 5 ist dies gewährleistet.

Die Dicke der Beschichtung 5 ist erfindungsgemäß kleiner als 5 µm. Besonders bevorzugt liegt die Dicke der Beschichtung 5 im Bereich von 0,5 bis 2 µm.

Weitere Schneidkanten ergeben sich durch das Trennen des Strangextrudates 1 auf die gewünschte Länge. Dies ist erforderlich, da das Strangextrudat 1 üblicherweise als Endlosextrudat aus einem Extruder austritt. Nach dem Abkühlen, Vulkanisieren und beschichten wird das Strangextrudat dann in Stücke geschnitten, die der gewünschten Länge für zum Beispiel Wischgummis von Scheibenwischern entspricht.

Damit die Beschichtung 5 gut am Grundsubstrat 3 haftet, ist es möglich, dem Beschichtungsmaterial einen Haftvermittler zuzusetzen. Durch den Haftvermittler wird die Bindung mit dem Grundsubstrat 3 verbessert. Als Haftvermittler eignen sich zum Beispiel Polyolefinelastomere oder Polyolefinplastomere, wie sie im Handel erhältlich sind.

Weiterhin können dem Material für die Beschichtung 5 auch andere Zusatzstoffe zugesetzt werden. Derartige Zusatzstoffe sind zum Beispiel UV-Stabilisatoren.

In Figur 2 ist schematisch ein Verfahren zur Herstellung des erfindungsgemäß ausgebildeten Strangextrudates schematisch dargestellt.

In einem Extruder 11 wird das Grundsubstrat 3 des Strangextrudates hergestellt. Der Extruder 11 ist ein üblicher, dem Fachmann bekannter Extruder, wie er zur Herstellung von Strangextrudaten 1 aus einem elastomeren Polymermaterial eingesetzt wird. Um den gewünschten Querschnitt zu erhalten wird das Grundsubstrat 3 am Extruder 11 durch ein Werkzeug gepresst, welches den gewünschten Querschnitt aufweist.

In einer Beschichtungsvorrichtung 13 wird auf das Grundsubstrat 3 erfindungsgemäß ein Polymerpulver 15 aufgetragen. Das Polymerpulver 15 besteht im Wesentlichen aus Partikeln mit einer Korngröße von maximal 5 µm. Das bedeutet, dass mindestens 95 Gew.-% der Pulverpartikel eine Korngröße von weniger als 5 µm aufweisen. Bevorzugt liegt die maximale Korngröße im Bereich zwischen 0,5 und 2 µm. Das Material des Polymerpulvers 15 ist ausgewählt aus UHMW-PE, HDPE, PE-X, PE, PP, PTFE, PA.

Das Auftragen des Polymerpulvers 15 in der Beschichtungsvorrichtung 13 erfolgt zum Beispiel trocken. Hierzu wird das Polymerpulver 15 zum Beispiel elektrostatisch aufgeladen und auf das Grundsubstrat 3 aufgesprüht. Weiterhin ist es auch möglich, dass das Polymerpulver 15 in einem Behälter enthalten ist und das Grundsubstrat 3 durch das Polymerpulver im Behälter hindurchgeführt wird. Beim Hindurchziehen durch den Behälter lagert sich Polymerpulver auf dem Grundsubstrat 3 ab, so dass eine dünne Pulverschicht 17 auf das Grundsubstrat 3 aufgetragen ist. Damit das Polymerpulver 15 auf dem Grundsubstrat 3 haftet, ist es möglich, zum Beispiel das Grundsubstrat 3 elektrostatisch aufzuladen. Alternativ ist es auch möglich, das Grundsubstrat 3 mit einem Haftvermittler zu versehen, an welchem das Polymerpulver 15 haftet. Aufgrund der guten Klebeeigenschaften von Elastomermaterialien, insbesondere Gummi, ist eine elektrostatische Aufladung der Pulverpartikel nicht unbedingt notwendig

Zusätzlich oder alternativ zur Klebekraft des Elastomermaterials, insbesondere des Gummis ist es auch möglich, die Haftung der Polymerpartikel auf der Oberfläche des Grundsubstrates 3 durch eine Vorbehandlung der Oberfläche mit einem Haftvermittler zu unterstützen.

Weitere Geeignete Verfahren, mit denen das Polymerpulver 15 auf das Grundsubstrat 3 aufgebracht werden kann, sind z. B. Wirbelsintern oder Aufschleudern des Polymerpulvers 15 z. B. mit Hilfe eines Dosierrades oder mit rotierenden Bürsten.

In einer weiteren Ausführungsform ist es auch möglich, dass das Polymerpulver 15 in einem Lösungsmittel dispergiert ist und das Polymerpulver samt Lösungsmittel als Dispersion auf das Grundsubstrat aufgebracht wird. Das Aufbringen der Dispersion kann dabei ebenfalls mit jedem beliebigen, dem Fachmann bekannten Auftragsverfahren erfolgen. So ist es zum Beispiel möglich, dass das Grundsubstrat 3 in die Dispersion aus Lösungsmittel und Polymerpulver 15 eingetaucht wird. Auch ist es möglich, dass die Dispersion auf das Grundsubstrat 3 aufgesprüht wird, wie dies zum Beispiel durch übliche Lackierverfahren bekannt ist.

Nach dem Auftragen des Polymerpulvers 15 auf das Grundsubstrat 3 wird dieses einer Vulkanisationslinie 19 zugeführt. In der Vulkanisationslinie 19 wird das Grundsubstrat 3 aus dem Elastomermaterial zu einem Gummi vulkanisiert. Durch die bei der Vulkanisation auf tretende Wärme wird das Polymerpulver 15 aufgeschmolzen und bildet so gleichzeitig eine dünne Beschichtung auf dem Grundsubstrat 3. Die dünne Beschichtung auf dem Grundsubstrat 3 hat die Form eines dünnen Polymerfilms.

Damit die Beschichtung 5 auf dem Grundsubstrat 3 gut haftet, ist es möglich, dass dem Polymerpulver 15, welches in der Beschichtungsvorrichtung 13 auf das Grundsubstrat 3 aufgetragen wurde, ein Haftvermittler zugesetzt ist.

Weiterhin können dem Polymerpulver 15 auch weitere Additive zugesetzt sein. Diese Additive werden zugesetzt, um die Eigenschaften des Polymerpulvers 15 und damit auch der damit erzeugten Beschichtung 5 zu verändern. Geeignete Additive sind zum Beispiel UV-Stabilisatoren, Antioxidantien und Ozonschutzmittel.

Die Vulkanisation des Strangextrudates 1 in der Vulkanisationslinie 19 erfolgt nach üblichen, dem Fachmann bekannten Vulkanisationsverfahren.

In einer alternativen Ausführungsform, wie sie in Figur 3 dargestellt ist, ist es auch möglich, dass das Grundsubstrat 3 vor dem Auftragen des Polymerpulvers 15 in der Beschichtungsvorrichtung 13 vulkanisiert wird. Hierzu wird das Grundsubstrat vor dem Auftragen des Polymerpulvers 15 durch die Vulkanisationslinie 19 geführt. In der Vulkanisationslinie 19 wird das Grundsubstrat 3 zumindest teilweise vulkanisiert. Auch ist es möglich, bereits eine vollständige Vulkanisation des Grundsubstrates 3 durchzuführen.

Auf das in der Vulkanisationslinie 19 zumindest teilweise vulkanisierte oder vollständig vulkanisierte Grundsubstrat wird das Polymerpulver 15 in der Beschichtungsvorrichtung 13 aufgetragen. Das Auftragen des Polymerpulvers 15 erfolgt dabei vorzugsweise nach dem gleichen Verfahren wie die in der Figur 2 dargestellten Ausführungsform.

Nach dem Auftragen des Polymerpulvers 15 auf das Grundsubstrat 3 wird das Grundsubstrat 3 mit der Pulverschicht 17 einem Ofen 21 zugeführt. Im Ofen 21 wird das Polymerpulver 15, welches die Polymerschicht 17 auf dem Grundsubstrat 3 bildet, aufgeschmolzen. Durch das Aufschmelzen verbinden sich die einzelnen Pulverpartikel zu einem durchgehenden Film. Die gewünschte Beschichtung 5 auf dem Grundsubstrat 3 wird gebildet.

Als Ofen 21 eignet sich jeder beliebige, dem Fachmann bekannte Ofen. So kann die zum Aufschmelzen des Polymerpulvers 15 notwendige Wärme zum Beispiel durch IR-Strahlung, Heißluft oder auch auf jede beliebige andere, dem Fachmann bekannte Art erzeugt werden.

So kann die Wärme zum Beispiel auch durch Mikrowellen erzeugt werden. Dies ist insbesondere dann möglich, wenn polare Beschichtungsmaterialien, z. B. Polyamide, eingesetzt werden.

Die Temperatur zum Aufschmelzen des Polymerpulvers 15 ist von der Art des Polymers abhängig. Es ist jeweils nur darauf zu achten, dass die Temperatur im Ofen 21 höher ist als die Schmelztemperatur des Polymers, das die Beschichtung 5 bildet.

Wie in den Figuren 2 und 3 dargestellt erfolgt das Beschichten des Grundsubstrats 3 mit der Beschichtung 5 aus dem Polymerpulver 15 in einer gemeinsamen Herstellungslinie. Alternativ ist es jedoch auch möglich, dass zunächst das Grundsubstrat 3 hergestellt wird. Dieses kann zum Beispiel auf einen Vorrat aufgewickelt werden. Das Grundsubstrat 3 kann dann in einer zweiten Anlage mit der Beschichtung 5 aus dem Polymerpulver 15 beschichtet werden. Bevorzugt ist es jedoch, dass die Herstellung des Grundsubstrates 3 und dessen Beschichtung in einer gemeinsamen Produktionslinie erfolgen.

## Patentansprüche

1. Strangextrudat aus einem Elastomermaterial, wobei auf ein strangförmiges Grundsubstrat (3) aus dem Elastomermaterial eine Beschichtung (5) aus einem Polymermaterial aufgebracht ist, **dadurch gekennzeichnet, dass** die Beschichtung (5) in Form eines Films ausgebildet ist und eine Schichtdicke von weniger als 5 µm aufweist, wobei das Polymermaterial UHMW-PE, HDPE,
PE-X, PE, PP, PTFE oder PA ist.

2. Strangextrudat gemäß Anspruch 1, **dadurch gekennzeichnet, dass** das Elastomermaterial für das Strangextrudat (1) ausgewählt ist aus Naturkautschuk, ChloroprenKautschuk, Ethylen-Propylen-Terpolymer, Ethylen-Propylen-Kautschuk und Mischungen daraus.

3. Strangextrudat gemäß einem der Ansprüche 1 bis 3, **dadurch gekennzeichnet, dass** das Polymermaterial für die Beschichtung (5) mindestens einen Haftvermittler enthält.

4. Strangextrudat gemäß Anspruch 4, **dadurch gekennzeichnet, dass** der Haftvermittler ausgewählt ist aus Polyolefinplastomeren und Polyolefinelastomeren.

5. Strangextrudat gemäß einem der Ansprüche 1 bis 5, **dadurch gekennzeichnet, dass** das Polymermaterial für die Beschichtung (5) UV-Stabilisatoren, Antioxidantien oder O-zonstabilisatoren enthält.

6. Verfahren zur Herstellung eines Strangextrudates (1) gemäß einem der Ansprüche 1 bis 6, folgende Schritte umfassend:
(a) Auftragen einer Schicht aus einem Polymerpulver (15) auf ein strangförmiges Grundsubstrat (3) aus einem Elastomermaterial, wobei das Polymerpulver im Wesentlichen aus Partikeln mit einer Korngröße von maximal 5 µm besteht,
(b) Aufschmelzen des Polymerpulvers (15) zur Herstellung einer einheitlichen Beschichtung (5) in Form eines Films auf dem Grundsubstrat (3), wobei die Beschichtung (5) eine Schichtdicke von weniger als 5 µm aufweist

7. Verfahren nach Anspruch 7, **dadurch gekennzeichnet, dass** die Schicht aus dem Polymerpulver (15) in Schritt (a) vor einem Vulkanisierungsschritt auf das Grundsubstrat (3) aus dem Elastomermaterial aufgetragen wird.

8. Verfahren nach Anspruch 7, **dadurch gekennzeichnet, dass** das Grundsubstrat (3) aus dem Elastomermaterial zumindest teilweise vulkanisiert wird, bevor die Schicht aus dem Polymerpulver (15) in Schritt (a) aufgetragen wird.

9. Verfahren nach Anspruch 8, **dadurch gekennzeichnet, dass** das Aufschmelzen des Polymerpulvers (15) in Schritt (b) während des Vulkanisierungsschrittes erfolgt.

10. Verfahren nach einem der Ansprüche 7 bis 9, **dadurch gekennzeichnet, dass** das Polymerpulver (15) zum Aufschmelzen in Schritt (b) durch Heißluft oder Mikrowellen erhitzt wird.

11. Verfahren nach einem der Ansprüche 7 bis 9, **dadurch gekennzeichnet, dass** das Grundsubstrat (3) aufgeheizt wird und das Polymerpulver (15) auf das heiße Grundsubstrat (3) aufgetragen wird.

12. Verwendung des Strangextrudates nach einem der Ansprüche 1 bis 6 zur Herstellung von Wischgummis, insbesondere von Wischgummis für Scheibenwischer von Kraftfahrzeugen, Türdichtungen oder Fensterdichtungen.

## Claims

1. Strand extrudate made of an elastomer material, where a coating (5) made of a polymer material has been applied to a parent substrate (3) in the form of a strand made of the elastomer material, **characterized in that** the coating (5) takes the form of a film and its layer thickness is less than 5 µm, where the polymer material is UHMWPE, HDPE, PEX, PE, PP, PTFE or PA.

2. Strand extrudate according to Claim 1, **characterized in that** the elastomer material for the strand extrudate (1) has been selected from natural rubber, chloroprene rubber, ethylene-propylene terpolymer, ethylene-propylene rubber and mixtures thereof.

3. Strand extrudate according to any of Claims 1 to 3, **characterized in that** the polymer material for the coating (5) comprises at least one adhesion promoter.

4. Strand extrudate according to Claim 4, **characterized in that** the adhesion promoter has been selected from polyolefin thermoplastics and polyolefin elastomers.

5. Strand extrudate according to any of Claims 1 to 5, **characterized in that** the polymer material for the coating (5) comprises UV stabilizers, antioxidants or ozone stabilizers.

6. Process for producing a strand extrudate (1) according to any of Claims 1 to 6, encompassing the following steps:
(a) applying a layer made of a polymer powder (15) to a parent substrate (3) in the form of a strand made of an elastomer material, where the polymer powder consists essentially of particles with a grain size of at most 5 µm,
(b) melting the polymer powder (15) to produce a unitary coating (5) in the form of a film on the parent substrate (3), where the layer thickness of the coating (5) is less than 5 µm.

7. Process according to Claim 7, **characterized in that** the layer made of the polymer powder (15) is applied in step (a) prior to a vulcanization step to the parent substrate (3) made of the elastomer material.

8. Process according to Claim 7, **characterized in that** the parent substrate (3) made of the elastomer material is vulcanized at least to some extent before the layer made of the polymer powder (15) is applied in step (a).

9. Process according to Claim 8, **characterized in that** the melting of the polymer powder (15) in step (b) takes place during the vulcanization step.

10. Process according to any of Claims 7 to 9, **characterized in that** hot air or microwaves is/are used to heat the polymer powder (15) for the melting process in step (b).

11. Process according to any of Claims 7 to 9, **characterized in that** the parent substrate (3) is heated and the polymer powder (15) is applied to the hot parent substrate (3).

12. Use of the strand extrudate according to any of Claims 1 to 6 for producing wiper rubber, in particular wiper rubber for windscreen wipers of motor vehicles, door seals or window seals.

## Revendications

1. Produit extrudé en matériau élastomère, dans lequel un revêtement (5) en matériau polymère est appliqué sur un substrat de base (3) en forme de barre de matériau élastomère,
**caractérisé en ce que**
le revêtement (5) est configuré en film et présente une épaisseur de couche inférieure à 5 µm, le matériau polymère étant l'UHMW-PE, le HDPE, le PE-X, le PE, le PP, le PTFE ou le PA.

2. Produit extrudé selon la revendication 1, **caractérisé en ce que** le matériau élastomère prévu pour le produit extrudé (1) est sélectionné parmi le caoutchouc naturel, le caoutchouc au chloroprène, les terpolymères d'éthylène et de propylène, le caoutchouc à l'éthylène-propylène et leurs mélanges.

3. Produit extrudé selon l'une des revendications 1 à 3, **caractérisé en ce que** le matériau polymère prévu pour le revêtement (5) contient au moins un agent de renforcement de l'adhérence.

4. Produit extrudé selon la revendication 4, **caractérisé en ce que** l'agent de renforcement de l'adhérence est sélectionné parmi les plastomères de polyoléfine et les élastomères de polyoléfine.

5. Produit extrudé selon l'une des revendications 1 à 5, **caractérisé en ce que** le matériau polymère prévu pour le revêtement (5) contient des agents de protection contre les UV, des antioxydants ou des agents de protection contre l'ozone.

6. Procédé de fabrication d'un extrudé (1) selon l'une des revendications 1 à 6, le procédé comportant les étapes suivantes :
(a) appliquer une couche d'une poudre polymère (15) sur un substrat de base (3) en forme de barre de matériau élastomère, la poudre polymère étant constituée essentiellement de particules d'une granulométrie d'au plus 5 µm,
(b) faire fondre la poudre polymère (15) pour former sur le substrat de base (3) un revêtement unitaire (5) sous la forme d'un film, le revêtement (5) présentant une épaisseur de couche inférieure à 5 µm.

7. Procédé selon la revendication 7, **caractérisé en ce qu'**à l'étape (a), la couche de poudre polymère (15) est appliquée sur le substrat de base (3) en matériau élastomère avant une étape de vulcanisation.

8. Procédé selon la revendication 7, **caractérisé en ce qu'**à l'étape (a), le substrat de base (3) en matériau élastomère est au moins partiellement vulcanisé avant l'application de la couche de poudre polymère (15).

9. Procédé selon la revendication 8, **caractérisé en ce qu'**à l'étape (b), la fusion de la poudre polymère (15) s'effectue pendant l'étape de vulcanisation.

10. Procédé selon l'une des revendications 7 à 9, **caractérisé en ce qu'**à l'étape (b), la poudre polymère (15) est chauffée par de l'air chaud ou des microondes pour être fondue.

11. Procédé selon l'une des revendications 7 à 9, **caractérisé en ce que** le substrat de base (3) est chauffé et la poudre polymère (15) est appliquée sur le substrat de base (3) chaud.

12. Utilisation du produit extrudé selon l'une des revendications 1 à 6 pour fabriquer du caoutchouc de balais, en particulier de caoutchouc de balais d'essuie-glace de véhicule automobile, des joints d'étanchéité de portes ou des joints d'étanchéité de fenêtres.
